# EUROPEAN PATENT APPLICATION

(11) **EP 0 720 373 A1**
(43) Date of publication of application: **03.07.1996**
(21) Application number: 94120966.0
(22) Date of filing: 30.12.1994
(51) Int. Cl.: H04N 7/26, H04N 7/36

(54) **Method and apparatus for encoding a video signal using region-based motion vectors**

(71) Applicant: DAEWOO ELECTRONICS CO., LTD, Jung-Gu, Seoul 100-095 (KR)
(72) Inventor: Jung, Hae-Mook, Seoul (KR)
(74) Representative: von Samson-Himmelstjerna, Friedrich R., Dipl.-Phys.

(57) **Abstract**

A motion compensation block for use in a motion-compensated video signal encoder determines a predicted current frame based on a current frame and a previous frame of a digital video signal.

The motion compensation block comprises a segmentation block for segmenting the previous frame into one or more segmented regions; a region-based displacement estimator for providing one or more displacement vectors between the current and the previous frames, each of the one or more displacement vectors representing a motion of each of the one or more segmented regions; a prediction block for constructing an intermediate predicted frame by translating each of the one or more segmented regions by a corresponding displacement vector; and a post-processing block for producing a motion vector for each pixel included in the intermediate predicted frame based on said one or more displacement vectors and generating a pixel value of the previous frame which corresponds to the motion vector for each pixel of the intermediate predicted frame as a pixel value thereof to thereby determine the predicted current frame.

## Description

### Field of the Invention

The present invention relates to a method and an apparatus for encoding a video signal; and, more particularly, to a method and an apparatus for encoding a video signal using region-based motion vectors.

### Description of the Prior Art

As is well known, transmission of digitized video signals can attain video images of a much higher quality than the transmission of analog signals. When an image signal comprising a sequence of image "frames" is expressed in a digital form, a substantial amount of data is generated for transmission, especially in the case of a high definition television system. Since, however, the available frequency bandwidth of a conventional transmission channel is limited, in order to transmit the substantial amounts of digital data therethrough, it is inevitable to compress or reduce the volume of the transmission data. Among various video compression techniques, the so-called hybrid coding technique, which combines temporal and spatial compression techniques together with a statistical coding technique, is known to be most effective.

Most hybrid coding techniques employ a motion compensated DPCM(differential pulse coded modulation), two-dimensional DCT(discrete cosine transform), quantization of DCT coefficients, and VLC(variable length coding). The motion compensated DPCM is a process of determining the movement of an object between a current frame and its previous frame, and predicting the current frame according to the motion flow of the object to produce a differential signal representing the difference between the current frame and its prediction. This method is described, for example, in Staffan Ericsson, "Fixed and Adaptive Predictors for Hybrid Predictive/Transform Coding", IEEE Transactions on Communications, COM-33, No. 12(December 1985); and in Ninomiya and Ohtsuka, "A Motion-compensated Interframe Coding Scheme for Television Pictures", IEEE Transactions on Communications, COM-30, No. 1 (January 1982).

The two-dimensional DCT, which reduces or removes spatial redundancies between image data, converts a block of digital image data, for example, a block of 8x8 pixels, into a set of transform coefficient data. This technique is described in Chen and Pratt, "Scene Adaptive Coder", IEEE Transactions on Communications, COM-32, No. 3(March 1984). By processing such transform coefficient data with a quantizer, zigzag scanning, and VLC, the amount of data to be transmitted can be effectively compressed.

Specifically, in the motion compensated DPCM, current frame data is predicted from the corresponding previous frame data based on an estimation of the motion between the current and the previous frames. Such estimated motion may be described in terms of two dimensional motion vectors representing the displacement of pixels between the previous and the current frames.

Several methods for estimating the displacement of an object in a video sequence have been proposed. Generally, they can be classified into two types: a pixel recursive algorithm; and a block matching algorithm(see, e.g., J.R. Jain et al., "Displacement Measurement and Its Application in Interframe Image Coding", IEEE Transactions of Communications COM-29, No. 12(December 1981)).

According to the block matching algorithm, which is more widely used, a current frame is divided into a multiplicity of search blocks. The size of a search block typically ranges between 8x8 and 32x32 pixels. To determine a motion vector for a search block in the current frame, a similarity calculation is performed between the search block of the current frame and each of a plurality of equal-sized candidate blocks included in a generally larger search region within a previous frame. An error function such as the mean absolute error or mean square error is used to carry out the similarity measurement between the search block of the current frame and each of the candidate blocks in the search region. And a motion vector, by definition, represents the displacement between the search block and a candidate block which yields a minimum error function.

In a real image, a unit of a movement is an object or a region on an object rather than a block of a fixed size. Therefore, in a motion compensation using the conventional block matching algorithm, a blocking effect at the boundary of a block may occur, to thereby deteriorate the picture quality.

On the other hand, if an image is encoded using a region-based method and transmitted to a decoder, information about the region boundary will be needed in the decoding process at the decoder.

### Summary of the Invention

It is, therefore, a primary object of the present invention to provide a method and apparatus for encoding and decoding a video signal employing a region-based method without requiring additional information about the region boundary, thereby improving the overall compression efficiency.

In accordance with the present invention, there is provided an apparatus, for use in a motion-compensated video signal encoder, for determining a predicted current frame based on a current frame and a previous frame of a digital video signal, comprising:
means for dividing the previous frame into one or more segmented regions;
means for providing one or more displacement vectors between the current and the previous frames, each of said one or more displacement vectors representing a motion of each of said one or more segmented regions;
means for constructing an intermediate predicted frame by translating each of said one or more segmented regions by a corresponding displacement vector; and
means for producing a motion vector for each pixel included in the intermediate predicted frame based on said one or more displacement vectors and generating a pixel value of the previous frame which corresponds to the motion vector for each pixel of the intermediate predicted frame as the pixel value thereof, to thereby determine the predicted current frame.

### Brief Description of the Drawings

The above and other objects and features of the present invention will become apparent from the following description of preferred embodiments given in conjunction with the accompanying drawings, in which:
Fig. 1 is a block diagram of a video encoder employing a motion compensation block of the present invention;
Fig. 2 shows a detailed block diagram of the motion compensation block shown in Fig. 1; and
Figs. 3A to 3C represent a diagram for explaining the procedure carried out in the motion compensation block.

### Detailed Description of the Preferred Embodiments

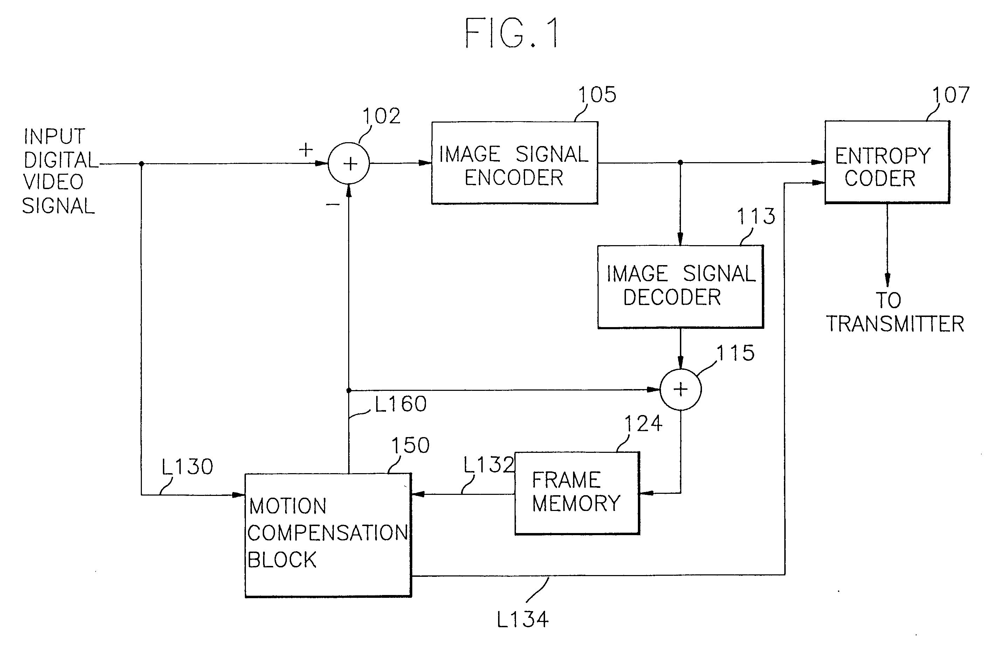

With reference to Fig. 1, there is shown a block diagram of a video encoder which employs a motion compensation block 150 of the present invention. An input digital video signal is fed to a subtractor 102 and the motion compensation block 150.

At the motion compensation block 150, the current frame signal on a line L130 and a reconstructed previous frame signal on a line L132 from a frame memory 124 are processed to estimate displacement vectors, each of which represents a displacement between a region of the previous frame and a best matching region included in the current frame, wherein the region is defined as a group of pixels having similar characteristics. Each of the displacement vectors on the line L134 provided by the motion compensation block 150 is applied to a entropy coder 107.

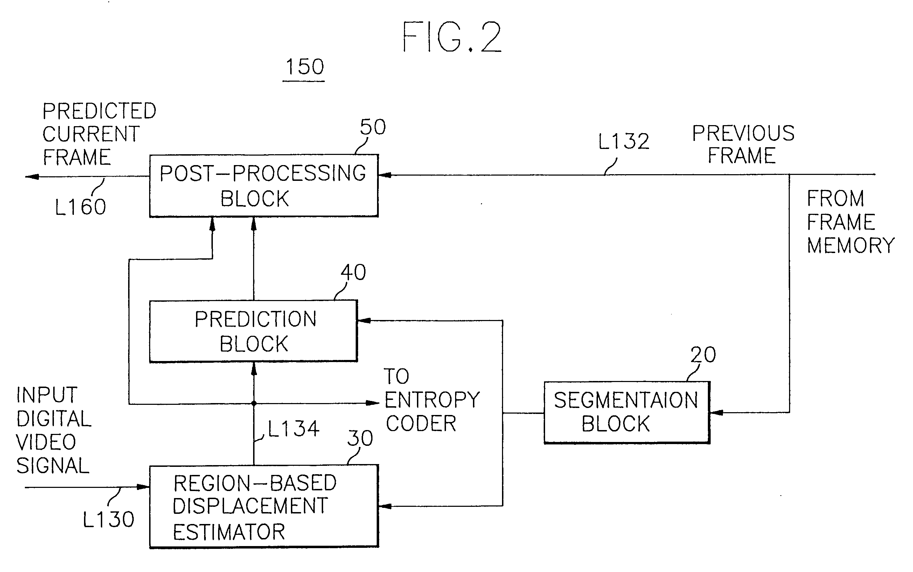

At the motion compensation block 150, a prediction signal for the current frame is also determined by using the displacement vectors and provided to the subtractor 102 and an adder 115 on a line L160. Specifically, the prediction signal is predicted from the previous frame by using the displacement vectors as described with reference to Fig. 2.

The prediction signal from the motion compensation block 150 is subtracted from the current frame signal at the subtractor 102; and the resultant data, i.e., an error signal denoting the differential pixel value, is dispatched to an image signal encoder 105, wherein a block of error signals is encoded into a set of quantized transform coefficients, e.g., by using a discrete cosine transform(DCT) and any one of known quantization methods. Thereafter, the quantized transform coefficients are transmitted via two signal paths: one toward an entropy coder 107, wherein the quantized transform coefficients are coded together with the displacement vector on the line L134 by using, for example, a combination of run-length and variable length coding, to thereby be provided to a transmitter (not shown) for the transmission thereof; and the other to an image signal decoder 113, wherein the quantized transform coefficients are converted back into a reconstructed differential error signal by using an inverse quantization and inverse transform, respectively. Reconstruction of the error signal is required in order for the encoder to track the behavior of the decoder in a receiver to thereby prevent the decoder's reconstructed signal from diverging from the current frame signal.

The reconstructed error signal from the image signal decoder 113 and the prediction signal from the motion compensation block 150 are combined at the adder 115 to provide a reconstructed current frame signal to be written onto the frame memory 124.

Referring to Fig. 2, there is shown a block diagram of the motion compensation block 150 of the present invention. In the present invention, region-based displacement vectors are used in the encoding and decoding processes. In other words, displacement vectors are determined on the basis of regions of an image. To reconstruct the image encoded by using the region-based displacement vectors, information about the regions is needed in a corresponding decoder. Since the amount of data which can be transmitted from the encoder to the decoder is limited, it is more efficient to recover the region information in the decoder than to transmit the information from the encoder.

A previous frame stored in the frame memory 124 in Fig. 1 is identical to the frame reconstructed in the corresponding decoder; and regions obtained by segmenting the reconstructed previous frame in the encoder are the same as those of the corresponding decoder. Therefore, if a current frame is encoded using displacement vectors each of which corresponds to each of the regions, it is possible to reconstruct the current frame in the decoder without transmitting information about the region from the encoder. Fig. 3A illustrates a reconstructed previous frame comprising a plurality of regions, e.g., R0 to R7.

The previous frame stored in the frame memory 124 shown in Fig. 1 is inputted to a segmentation block 20. At the segmentation block 20, the previous frame is segmented into a number of regions, e.g., R0 to R7 shown in Fig. 3A. Various methods may be used in the segmentation process (see, e.g., A. K. Jain, "Fundamentals of Digital Image Processing", 1989, Prentice-Hall International).

The region information is inputted to a region-based displacement estimator 30, wherein the position of each of the region and the pixel values included therein are contained in the region information. The current frame signal represented as the input digital video signal is also provided to the region-based displacement estimator 30.

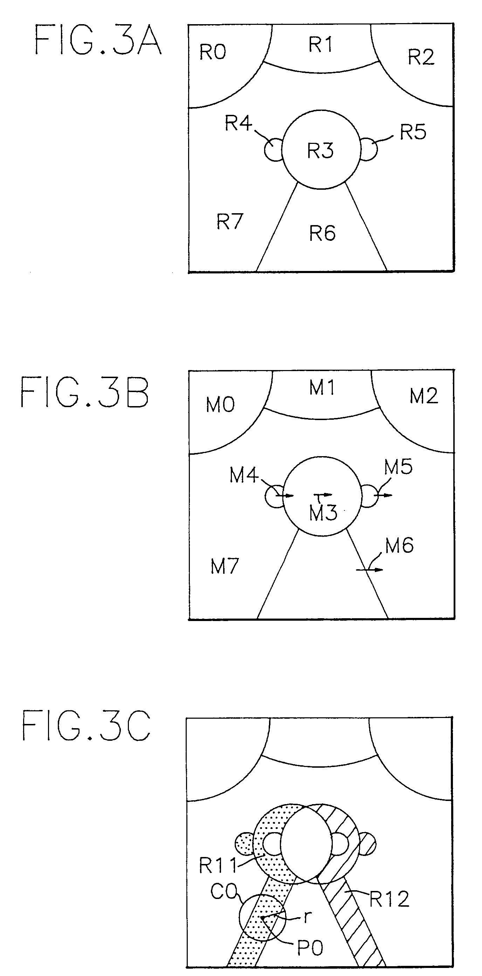

At the region-based displacement estimator 30, the displacement vectors between the current frame and the regions of the previous frame are estimated. Fig. 3B shows displacement vectors M0 to M7 between the previous frame and the current frame, wherein each of the displacement vectors represents a motion of the corresponding region of the previous frame shown in Fig. 3A. For the sake of simplicity, it is assumed that zero valued displacement vectors are assigned to the regions R0, R1, R2 and R7, which represent a background; and displacement vectors M3 to M6 have an identical value.

The displacement vectors are provided to a prediction block 40 and to the entropy coder 107 shown in Fig. 1 on the line L134. The region information determined at the segmentation block 20 is also coupled to the prediction block 40. At the prediction block 40, an intermediate predicted frame is determined by shifting each region shown in Fig. 3A by the corresponding displacement vector shown in Fig. 3B. In Fig. 3C, the intermediate predicted frame is depicted. In Fig. 3C, an empty region, i.e., a dotted region R11, represents pixels to which no pixel in the previous frame corresponds; and an overlapped region, i.e., a shaded region R12, represents pixels to each of which more than one pixel in the previous frame correspond. The rest of the intermediate predicted frame, excluding the empty and the overlapped regions R11 and R12, represents pixels to each of which one pixel in the previous frame corresponds. The intermediate predicted frame often includes the empty and overlapped regions because the intermediate predicted frame is determined by shifting each region in the previous frame by the displacement vectors determined for each region of the previous frame.

The intermediate predicted frame from the prediction block 40 and displacement vectors from the region-based displacement estimator 30 are inputted to a post-processing block 50. At the post-processing block 50, a motion vector for each of the pixels included in the empty and overlapped regions are determined as will be explained hereinafter, wherein a motion vector represents a displacement between a pixel of the intermediate predicted frame and a pixel of the previous frame determined in accordance with the present invention.

To find a predicted current frame from the intermediate predicted frame shown in Fig. 3C, the displacement vectors from the segmentation block 20 are assigned first as motion vectors for corresponding pixels not included in either the empty region R11 or the overlapped region R12; and motion vectors for each of the pixel included in the empty region R11 and the overlapped region R12 are then determined. To find a motion vector for a pixel P0 of the empty region R11 shown in Fig. 3C, all neighboring regions whose parts overlap a circle C0 are first determined. The circle C0 is of a predetermined radius r with the pixel P0 at its center. In this case, regions R6 and R7 are such neighboring regions. The motion vector of the pixel P0 is determined as an average of the motion vectors for the neighboring regions. Motion vectors for other pixels included in the regions R11 and R12 are determined in a similar manner. Thereafter, a pixel value of the previous frame which corresponds to a motion vector for each pixel of the intermediate predicted frame is determined as a pixel value for each pixel of the predicted current frame.

Referring back to Fig. 2, by retrieving pixel values of the previous frame from the frame memory 124 via the line L132 based on the motion vectors determined at the post-processing block 50 as explained above, the predicted current frame is obtained.

In a decoder corresponding to the encoder of the present invention, the motion compensation block is of a similar structure to that of Fig. 2 except that there is not a motion estimator such as the region-based displacement estimator 30 shown in Fig. 2 because the displacement vectors transmitted from the encoder are provided thereto. The motion compensation block includes a segmentation block, a prediction block and a post-processing block whose functions are the same as those explained with respect to the encoder above.

Specifically, a previous frame signal from a frame memory of the decoder may be the same as that of the encoder as explained above. The previous frame is inputted to the segmentation block to be divided into a plurality of regions. The prediction block determines an intermediate predicted frame in response to the region information from the segmentation block and the displacement vectors transmitted from the encoder explained with reference to Fig. 2. The post-processing block provides a predicted current frame which is the same as that of the encoder. The predicted current frame signal is further processed in the decoder to recover the current frame which is similar to the original video signal.

While the present invention has been described with respect to the particular embodiments, it will be apparent to those skilled in the art that various changes and modifications may be made without departing from the spirit and scope of the invention as defined in the following claims.

## Claims

1. An apparatus, for use in a motion-compensated video signal encoder, for determining a predicted current frame based on a current frame and a previous frame of a digital video signal, comprising:
means for dividing the previous frame into one or more segmented regions;
means for providing one or more displacement vectors between the current and the previous frames, each of said one or more displacement vectors representing a motion of each of said one or more segmented regions;
means for constructing an intermediate predicted frame by translating each of said one or more segmented regions by a corresponding displacement vector; and
means for producing a motion vector for each pixel included in the intermediate predicted frame based on said one or more displacement vectors and generating a pixel value of the previous frame which corresponds to the motion vector for each pixel of the intermediate predicted frame as the pixel value thereof, to thereby determine the predicted current frame.

2. The apparatus in accordance with claim 1, wherein said producing and generating means includes means for assigning the displacement vectors as motion vectors for corresponding pixels in a first region of the intermediate predicted frame, the first region representing pixels to each of which one pixel in the previous frame corresponds; and determining a motion vector for each pixel included in a second and third regions of the intermediate predicted frame based on motion vectors of neighboring pixels in the first region to thereby producing motion vector for each pixel included in the second and third regions of the intermediate predicted frame, the second region representing pixels to each of which no pixel in the previous frame corresponds and the third region representing pixels to each of which more than one pixel in the previous frame corresponds.

3. The apparatus in accordance with claim 2, wherein the determination of the motion vector for each pixel included in the second and third regions is carried out by averaging motion vectors of pixels in the first region which are disposed within a circle of a predetermined radius centering a pixel a motion vector of which is to be determined.

4. A method for use in a motion-compensated video signal encoder, for determining a predicted current frame based on a current frame and a previous frame of a digital video signal, comprising the steps of:
segmenting the previous frame into one or more segmented regions;
providing one or more displacement vectors between the current and the previous frames, each of the one or more displacement vectors representing a motion of each of the one or more segmented regions;
constructing an intermediate predicted frame by translating each of the one or more segmented regions by a corresponding displacement vector; and
producing a motion vector for each pixel included in the intermediate predicted frame based on said one or more displacement vectors and generating a pixel value of the previous frame which corresponds to the motion vector for each pixel of the intermediate predicted frame as a pixel value thereof to thereby determine the predicted current frame.

5. The method in accordance with claim 4, wherein said producing and generating step includes step for assigning the displacement vectors as motion vectors for corresponding pixels in a first region of the intermediate predicted frame, the first region representing pixels to each of which one pixel in the previous frame corresponds; and determining a motion vector for each pixel included in a second and third regions of the intermediate predicted frame based on motion vectors of neighboring pixels in the first region to thereby producing motion vector for each pixel included in the second and third regions of the intermediate predicted frame, the second region representing pixels to each of which no pixel in the previous frame corresponds and the third region representing pixels to each of which more than one pixel in the previous frame corresponds.

6. The method in accordance with claim 5, wherein the determination of the motion vector for each pixel included in the second and third regions is carried out by averaging motion vectors of pixels in the first region which are disposed within a circle of a predetermined radius centering a pixel a motion vector of which is to be determined.

7. An apparatus, for use in a motion-compensated video signal decoder, for determining a predicted current frame based on a previous frame of a video signal and one or more displacement vectors transmitted from an encoder, wherein the encoder includes means for dividing the previous frame into one or more segmented regions and means for providing said one or more displacement vectors between a current frame and the previous frame, each of said one or more displacement vectors representing a motion of each of said one or more segmented regions, said apparatus comprising:
means for dividing the previous frame into one or more segmented regions;
means for constructing an intermediate predicted frame by translating each of said one or more segmented regions by a corresponding displacement vector; and
means for producing a motion vector for each pixel included in the intermediate predicted frame based on said one or more displacement vectors and generating a pixel value of the previous frame which corresponds to the motion vector for each pixel of the intermediate predicted frame as the pixel value thereof, to thereby determine the predicted current frame.

8. The apparatus in accordance with claim 7, wherein said producing and generating means includes means for assigning the displacement vectors as motion vectors for corresponding pixels in a first region of the intermediate predicted frame, the first region representing pixels to each of which one pixel in the previous frame corresponds; and determining a motion vector for each pixel included in a second and third regions of the intermediate predicted frame based on motion vectors of neighboring pixels in the first region to thereby producing motion vector for each pixel included in the second and third regions of the intermediate predicted frame, the second region representing pixels to each of which no pixel in the previous frame corresponds and the third region representing pixels to each of which more than one pixel in the previous frame corresponds.

9. The apparatus in accordance with claim 7, wherein the determination of the motion vector for each pixel included in the second and third regions is carried out by averaging motion vectors of pixels in the first region which are disposed within a circle of a predetermined radius centering a pixel a motion vector of which is to be determined.

10. A method, for use in a motion-compensated video signal decoder, for determining a predicted current frame based on a previous frame of a video signal and one or more displacement vectors transmitted from an encoder, wherein the encoder includes means for dividing the previous frame into one or more segmented regions and means for providing said one or more displacement vectors between a current frame and the previous frame, each of said one or more displacement vectors representing a motion of each of said one or more segmented regions, said method comprises steps of:
dividing the previous frame into one or more segmented regions;
constructing an intermediate predicted frame by translating each of said one or more segmented regions by a corresponding displacement vector; and
producing a motion vector for each pixel included in the intermediate predicted frame based on said one or more displacement vectors and generating a pixel value of the previous frame which corresponds to the motion vector for each pixel of the intermediate predicted frame as the pixel value thereof, to thereby determine the predicted current frame.

11. The method in accordance with claim 10, wherein said producing and generating step includes step for assigning the displacement vectors as motion vectors for corresponding pixels in a first region of the intermediate predicted frame, the first region representing pixels to each of which one pixel in the previous frame corresponds; and determining a motion vector for each pixel included in a second and third regions of the intermediate predicted frame based on motion vectors of neighboring pixels in the first region to thereby producing motion vector for each pixel included in the second and third regions of the intermediate predicted frame, the second region representing pixels to each of which no pixel in the previous frame corresponds and the third region representing pixels to each of which more than one pixel in the previous frame corresponds.

12. The method in accordance with claim 10, wherein the determination of the motion vector for each pixel included in the second and third regions is carried out by averaging motion vectors of pixels in the first region which are disposed within a circle of a predetermined radius centering a pixel a motion vector of which is to be determined.
